# EUROPEAN PATENT APPLICATION

(11) **EP 4 472 111 A1**
(43) Date of publication of application: **04.12.2024**
(21) Application number: 23758904.9
(22) Date of filing: 09.01.2023
(51) Int. Cl.: H04J 14/02, H04Q 11/00

(54) **OPTICAL DEVICE, OPTICAL SWITCHING FULL MESH SYSTEM AND COMMUNICATION SYSTEM**

(30) Priority: 22.02.2022 CN 202210163877
(71) Applicant: Huawei Technologies Co., Ltd., Shenzhen, Guangdong 518129 (CN)
(72) Inventor: LAN, Peng, Shenzhen, Guangdong 518129 (CN); TIAN, Guangxiao, Shenzhen, Guangdong 518129 (CN); WEI, Juan, Shenzhen, Guangdong 518129 (CN); WU, Yangbo, Shenzhen, Guangdong 518129 (CN)
(74) Representative: Pfenning, Meinig & Partner mbB
(86) International application number: PCT/CN2023/071224
(87) International publication number: WO 2023/160279

(57) **Abstract**

Embodiments of this application provide an optical component, an optical switching fully-interconnected system, and a communication system, to reduce a backplane loss of an optical signal between the optical component and a switching node. The optical component specifically includes: a service processing module, an optical-to-electrical conversion module, a multiplexer, an optical switching switch, an optical receiving module, and an optical connector. When the optical component serves as a transmitting end, a first electrical signal generated by the service processing module is converted by the optical-to-electrical conversion module to generate a first optical signal, and the first optical signal is multiplexed by using the multiplexer and is output to a next-hop optical component through the optical switching switch and the optical connector. When the optical component serves as a receiving end, the optical connector receives a second optical signal output by an optical connector of a previous-hop optical component, the second optical signal is demultiplexed by using the optical receiving module and is output to the optical-to-electrical conversion module, the second optical signal is converted by the optical-to-electrical conversion module to generate a second electrical signal, and the second electrical signal is output to the service processing module.

## Description

This application claims priority to Chinese Patent Application No. 202210163877.7, filed with the China National Intellectual Property Administration on February 22, 2022 and entitled "OPTICAL COMPONENT, OPTICAL SWITCHING FULLY-INTERCONNECTED SYSTEM, AND COMMUNICATION SYSTEM", which is incorporated herein by reference in its entirety.

### TECHNICAL FIELD

This application relates to the field of optical communication, and in particular, to an optical component, an optical switching fully-interconnected system, and a communication system.

### BACKGROUND

With the development of communication technologies, a requirement for a capacity of a routing and switching device is also increasing. Current switching technologies usually relate to an electrical switching system and an optical switching system. The electrical switching system is based on packet switching, can implement a microsecond-level switching delay, and is a mainstream solution for implementing fast switching with a fine granularity. The optical switching system is based on optical wavelength or optical link switching, and can currently implement switching in milliseconds to seconds. A bandwidth of the optical switching system is large, but a rate is low.

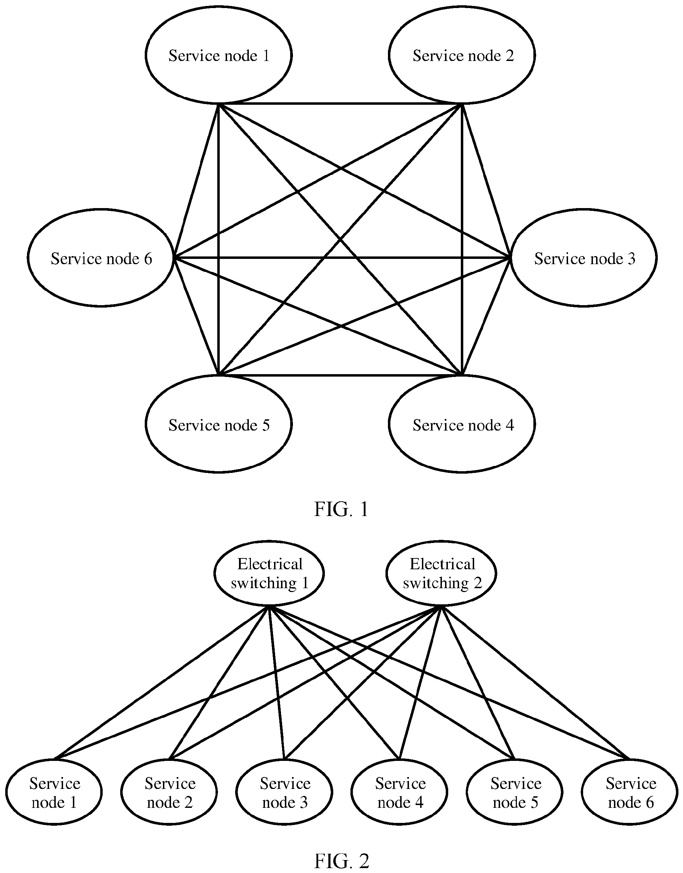

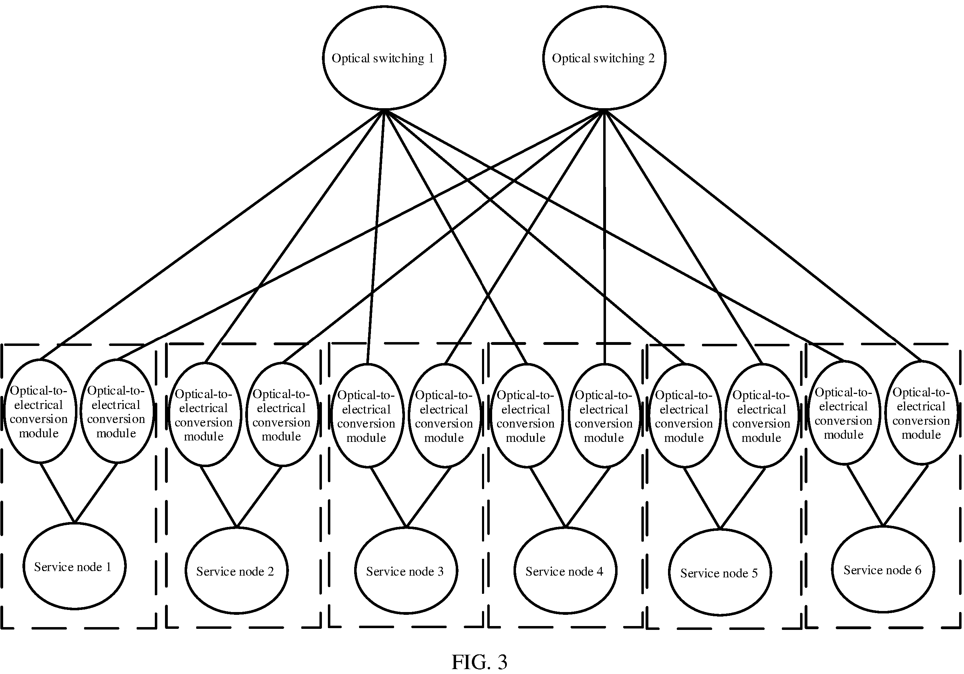

Currently, system architectures of the electrical switching system and the optical switching system have the following several possible implementations: In an electrical switching fully-interconnected architecture shown in FIG. 1, service nodes are directly connected to each other, to implement fast switching communication between a plurality of service nodes. In an electrical switching star-shaped interconnected architecture shown in FIG. 2, a plurality of service nodes are in indirect switching connection through several centralized switching nodes that are centralized, to implement fast switching communication between the plurality of service nodes. However, once a quantity of channels in the electrical switching system shown in FIG. 1 and FIG. 2 is determined, future bandwidth expansion can only be performed by increasing a single-channel rate, and improvement of the single-channel rate is limited. Therefore, there is a problem that space for increasing the bandwidth is limited. In an optical switching star-shaped interconnected architecture shown in FIG. 3, a plurality of service nodes are in indirect switching connection through several centralized switching nodes that are centralized, to implement fast switching communication between the plurality of service nodes. In an optical switching system, although a bandwidth may be increased according to a service requirement, in a switching star-shaped interconnected architecture, a loss of an entire optical link is large due to a loss of an N*N optical switch and four times of backplane traversal.

Therefore, currently, an optical component that increases a bandwidth according to a service requirement and reduces an optical link loss is urgently needed.

### SUMMARY

Embodiments of this application provide an optical component, an optical switching fully-interconnected system, and a communication system, to reduce a backplane loss of an optical signal between the optical component and a switching node.

According to a first aspect, this application provides an optical component. The optical component specifically includes: a service processing module, an optical-to-electrical conversion module, a multiplexer, an optical switching switch, an optical receiving module, and an optical connector. When the optical component serves as a transmitting end, a first electrical signal generated by the service processing module is converted by the optical-to-electrical conversion module to generate a first optical signal, and the first optical signal is multiplexed by using the multiplexer and is output to a next-hop optical component through the optical switching switch and the optical connector. When the optical component serves as a receiving end, the optical connector receives a second optical signal output by an optical connector of a previous-hop optical component, the second optical signal is demultiplexed by using the optical receiving module and is output to the optical-to-electrical conversion module, the second optical signal is converted by the optical-to-electrical conversion module to generate a second electrical signal, and the second electrical signal is output to the service processing module.

In this embodiment, the optical switching switch is integrated into the optical component, so that the optical component can directly perform service switching with another optical component, to reduce a backplane loss of an optical signal between the optical component and a switching node.

In a possible implementation, the optical switching switch is a 1*N optical switching switch, and N is a positive integer greater than or equal to 2. In this way, a fiber loss of an optical signal in a switching process can be further reduced.

In another possible implementation, there is one optical-to-electrical conversion module. In this way, deployment costs of the optical component are reduced.

In another possible implementation, the optical receiving module is an arrayed waveguide grating router (arrayed waveguide grating router, AWGR), or the optical receiving module includes a demultiplexer and an N* 1 optical switching switch, and N is a positive integer greater than or equal to 2. In this way, a possible solution in which the optical component implements an optical receiving function can be increased.

In another possible implementation, the optical switching switch is an optical switching switch implemented based on a micro-electro-mechanical system (micro electro mechanical system, MEMS) technology or a liquid crystal on silicon-based wavelength selective switch (liquid crystal on silicon-based wavelength selective switch, LCOS-based WSS). In this way, a possible solution for implementing the optical switching switch can be increased.

In another possible implementation, a response time of the optical switching switch is within a nanosecond level. In this way, a response speed of the optical component for optical switching can be improved.

According to a second aspect, this application provides an optical switching fully-interconnected system, specifically including: N optical components. Any two of the N optical components are directly connected to each other, and N is a positive integer greater than or equal to 2. The N optical components include a first optical component and a second optical component. The first optical component includes a first service processing module, a first optical-to-electrical conversion module, a first multiplexer, a first optical switching switch, a first optical receiving module, and a first optical connector. The second optical component includes a second service processing module, a second optical-to-electrical conversion module, a second multiplexer, a second optical switching switch, a second optical receiving module, and a second optical connector. A quantity of output ports of the first optical switching switch and a quantity of output ports of the second optical switching switch are greater than or equal to a quantity of optical components in the optical switching fully-interconnected system minus one. An electrical signal generated by the first service processing module is converted by the first optical-to-electrical conversion module to generate a first optical signal, where the first optical signal is multiplexed by using the first multiplexer and is sent to the second optical connector through the first optical switching switch and the first optical connector. An electrical signal generated by the second service processing module is converted by the second optical-to-electrical conversion module to generate a second optical signal, where the second optical signal is multiplexed by using the second multiplexer and is sent to the first optical connector through the second optical switching switch and the second optical connector.

In this embodiment, the optical switching switches are integrated into the optical components in the optical switching fully-interconnected system, so that a system architecture in which the optical components in the optical switching fully-interconnected system are directly connected to each other is formed, and direct service switching can be implemented between the optical components. In this way, a backplane loss of an optical signal between the optical component and a switching node is reduced.

In a possible implementation, the first optical switching switch is a 1*M optical switching switch, and M is a positive integer greater than or equal to N-1; and the second optical switching switch is a 1*M optical switching switch, and M is a positive integer greater than or equal to N-1.

In another possible implementation, the optical switching fully-interconnected system further includes a third optical component. Any two of the first optical component, the second optical component, and the third optical component are directly connected to each other. The third optical component includes a third service processing module, a third optical-to-electrical conversion module, a third multiplexer, a third optical switching switch, a third optical receiving module, and a third optical connector. An electrical signal generated by the third service processing module in the third optical component is converted by the third optical-to-electrical conversion module to generate a third optical signal, where the third optical signal is multiplexed by using the third multiplexer and is sent to the second optical connector and/or the first optical connector through the third optical switching switch and the third optical connector.

In another possible implementation, the first optical component, the second optical component, and the third optical component have a same structure. In this way, only one module needs to be used in one system, to reduce development costs of optical components.

In another possible implementation, the first optical receiving module is an arrayed waveguide grating router AWGR, or the first optical receiving module includes a demultiplexer and an M*1 optical switching switch. The second optical receiving module is an arrayed waveguide grating router AWGR, or the second optical receiving module includes a demultiplexer and an M*1 optical switching switch, and M is a positive integer greater than or equal to N-1.

According to a third aspect, this application provides a communication system. The communication system includes the optical switching fully-interconnected system described in the second aspect, and the optical switching fully-interconnected system includes the optical component described in the first aspect.

### BRIEF DESCRIPTION OF DRAWINGS

FIG. 1 is a diagram of an example architecture of an electrical switching fully-interconnected architecture;
FIG. 2 is a diagram of an example architecture of an electrical switching star-shaped interconnected architecture;
FIG. 3 is a diagram of an example architecture of an optical switching star-shaped interconnected architecture;
FIG. 4 is a diagram of an embodiment of an optical component used in an optical switching fully-interconnected system according to an embodiment of this application;
FIG. 5 is a diagram of another embodiment of an optical component used in an optical switching fully-interconnected system according to an embodiment of this application;
FIG. 6 is a diagram of another embodiment of an optical component used in an optical switching fully-interconnected system according to an embodiment of this application;
FIG. 7 is a diagram of another embodiment of an optical component used in an optical switching fully-interconnected system according to an embodiment of this application;
FIG. 8 is a diagram of another embodiment of an optical component used in an optical switching fully-interconnected system according to an embodiment of this application;
FIG. 9 is a diagram of another embodiment of an optical component used in an optical switching fully-interconnected system according to an embodiment of this application;
FIG. 10 is a diagram of another embodiment of an optical component used in an optical switching fully-interconnected system according to an embodiment of this application;
FIG. 11 is a diagram of an embodiment of an optical switching fully-interconnected system according to an embodiment of this application;
FIG. 12 is a diagram of another embodiment of an optical switching fully-interconnected system according to an embodiment of this application;
FIG. 13 is a diagram of another embodiment of an optical switching fully-interconnected system according to an embodiment of this application; and
FIG. 14 is a diagram of an embodiment of an optical switching system according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, with emergence of a new application scenario, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data used in such a way are interchangeable in proper circumstances, so that embodiments described herein can be implemented in other orders than the order illustrated or described herein. In addition, the terms "include", "contain" and any other variants mean to cover the non-exclusive inclusion, for example, a process, method, system, product, or device that includes a series of steps or modules is not necessarily limited to those steps or modules that are expressly listed, but may include other steps or modules that are not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved. Division into the units in this application is logical division. In actual application, there may be another division manner. For example, a plurality of units may be combined or integrated into another system, or some features may be ignored or not performed. In addition, the displayed or discussed mutual coupling or direct coupling or communication connection may be implemented through some interfaces. The indirect coupling or communication connection between the units may be in an electronic form or another similar form. This is not limited in this application. In addition, units or subunits described as separate parts may or may not be physically separate, may or may not be physical units, or may be distributed to a plurality of circuit units. Some or all of the units may be selected according to actual requirements to achieve the objectives of the solutions of this application.

With the development of communication technologies, a requirement for a capacity of a routing and switching device is also increasing. Current switching technologies usually relate to an electrical switching system and an optical switching system. The electrical switching system is based on packet switching, can implement a microsecond-level switching delay, and is a mainstream solution for implementing fast switching with a fine granularity. The optical switching system is based on optical wavelength or optical link switching, and can currently implement switching in milliseconds to seconds. A bandwidth of the optical switching system is large, but a rate is low.

Currently, system architectures of the electrical switching system and the optical switching system have the following several possible implementations: In an electrical switching fully-interconnected architecture shown in FIG. 1, service nodes are directly connected to each other, to implement fast switching communication between a plurality of service nodes. In an electrical switching star-shaped interconnected architecture shown in FIG. 2, a plurality of service nodes are in indirect switching connection through several centralized switching nodes that are centralized, to implement fast switching communication between the plurality of service nodes. However, once a quantity of channels in the electrical switching system shown in FIG. 1 and FIG. 2 is determined, future bandwidth expansion can only be performed by increasing a single-channel rate, and improvement of the single-channel rate is limited. Therefore, there is a problem that space for increasing the bandwidth is limited. In an optical switching star-shaped interconnected architecture shown in FIG. 3, a plurality of service nodes are in indirect switching connection through several centralized switching nodes that are centralized, to implement fast switching communication between the plurality of service nodes. In an optical switching system, although a bandwidth may be increased according to a service requirement, in a switching star-shaped interconnected architecture, a loss of an entire optical link is large due to a loss of an N*N optical switch and a plurality of times of traversing backplanes of service nodes. Therefore, currently, an optical component that increases a bandwidth according to a service requirement and reduces an optical link loss is urgently needed.

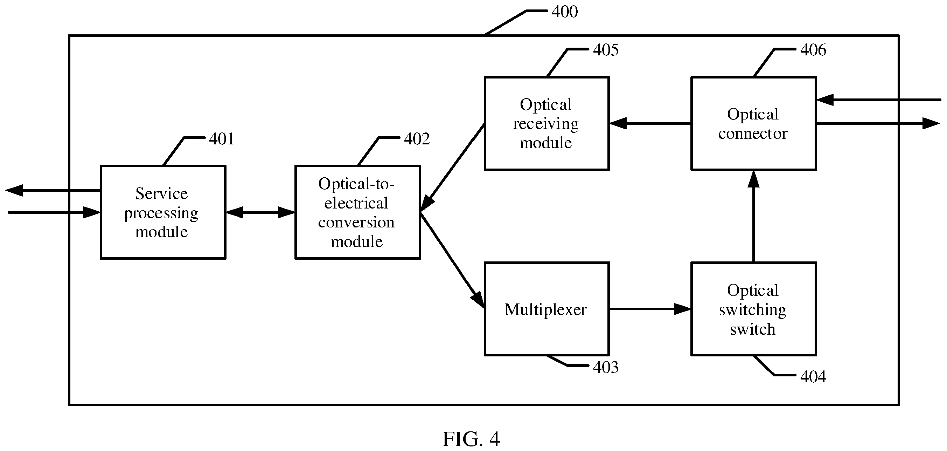

To resolve the foregoing problem, an embodiment of this application provides an optical component 400 shown in FIG. 4. The optical component 400 includes a service processing module 401, an optical-to-electrical conversion module 402, a multiplexer 403, an optical switching switch 404, an optical receiving module 405, and an optical connector 406.

Based on the foregoing optical component 400, when the optical component 400 serves as a transmitting end, the service processing module 401 is configured to process service data in communication to generate an electrical signal. The optical-to-electrical conversion module 402 is configured to modulate service data carried in the electrical signal onto a light source to generate a corresponding optical signal. It may be understood that the optical-to-electrical conversion module 402 receives the electrical signal, and the optical signal is generated by using a light source generator. The light source generator may be integrated into the optical component 400 or may exist separately from the optical component 400. In addition, the light source generator may generate a multi-wavelength light source, so that the optical-to-electrical converter 402 may modulate different service data to different wavelengths to generate different optical signals. The multiplexer 403 may multiplex optical signals of different wavelengths to generate one optical signal (that is, a first optical signal), and transmits the optical signal to the optical switching switch 404. The optical switching switch 404 selects a corresponding port to output the optical signal to the optical connector 406. The optical connector 406 is connected to an optical connector of a next-hop optical component (that is, a service node) via an optical fiber. Therefore, the optical connector 406 transmits the optical signal to the next-hop service node via the optical fiber. In this embodiment, the optical component 400 is directly connected to the next-hop optical component.

Based on the foregoing optical component 400, when the optical component 400 serves as a receiving end, the optical connector 406 receives a second optical signal sent by a previous-hop optical component (that is, a service node), and then the optical connector 406 forwards the second optical signal to the optical receiving module 405. Then, the optical receiving module 405 outputs the second optical signal from a corresponding port, performs demultiplexing to generate a multi-wavelength optical signal, and sends the multi-wavelength optical signal to the optical-to-electrical conversion module 402. Then, the optical-to-electrical conversion module 402 demodulates the multi-wavelength optical signal to generate a corresponding electrical signal and sends the electrical signal to the service processing module 401.

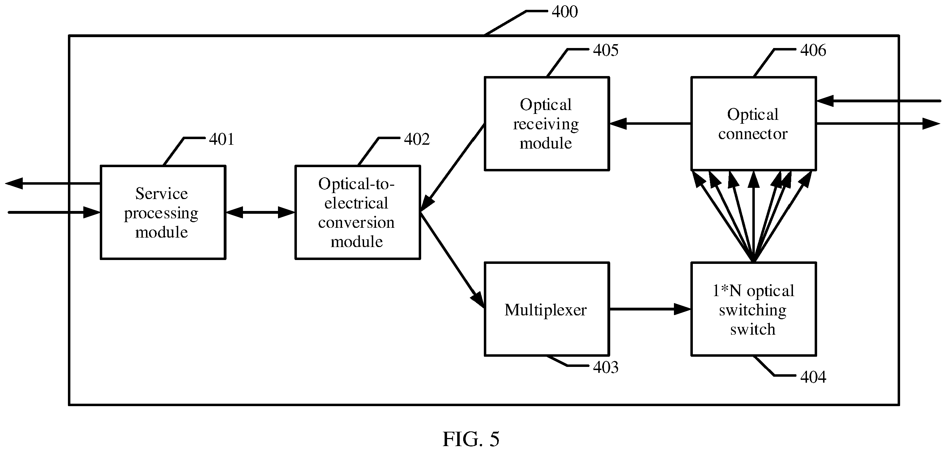

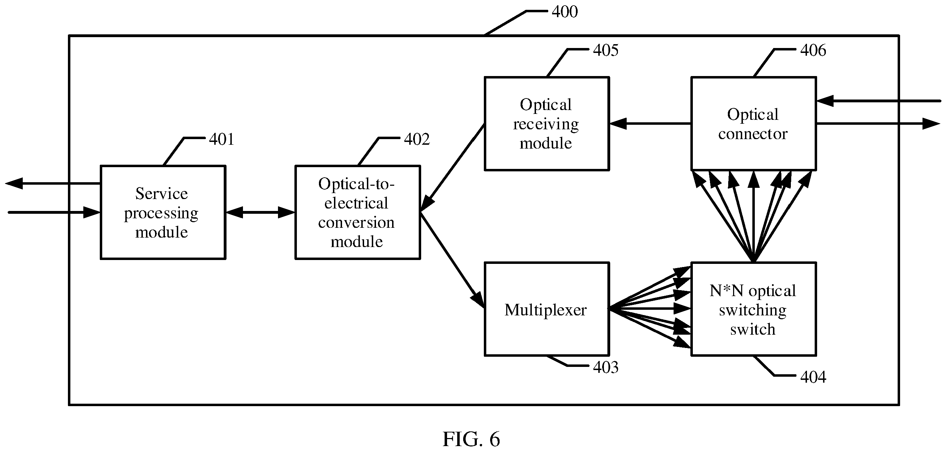

Based on the optical component 400 shown in FIG. 4, the optical switching switch 404 may be a 1 *N optical switching switch, and a diagram of a possible implementation of the optical switching switch 404 may be shown in FIG. 5. It may be understood that the optical switching switch 404 may also be an N*N optical switching switch, and a diagram of a possible implementation of the optical switching switch 404 may be shown in FIG. 6. In this embodiment, a value of N is related to a quantity of service nodes in an optical switching fully-interconnected system in which the optical component 400 is used, and the value of N is greater than or equal to the quantity of service nodes in the optical switching fully-interconnected system minus one. For example, if there are a total of six service nodes, including the optical component 400, in the optical switching fully-interconnected system, the value of N is greater than or equal to 5. In addition, the optical switching switch may be an optical switching switch implemented based on a micro-electro-mechanical system (micro electro mechanical system, MEMS) technology or a liquid crystal on silicon-based wavelength selective switch (liquid crystal on silicon-based wavelength selective switch, LCOS-based WSS).

In this embodiment, to implement a response speed for optical switching, a response time of the optical switching switch may be designed to be within a nanosecond level. A specific implementation of the optical switching switch is not limited herein.

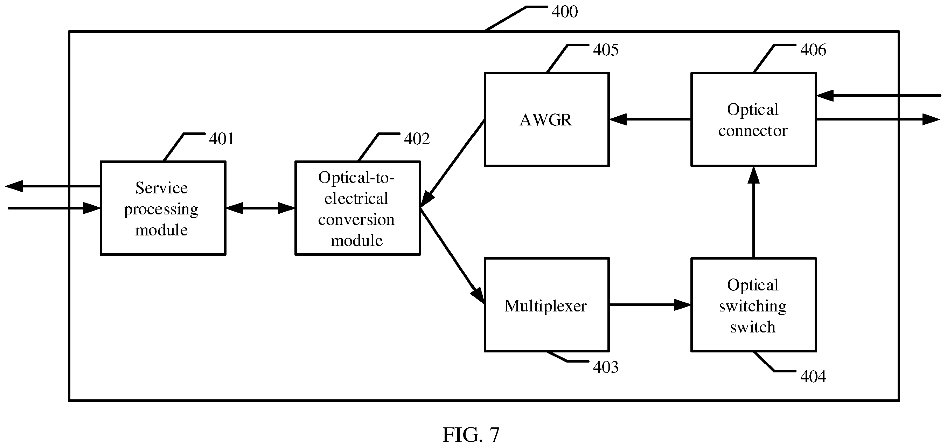

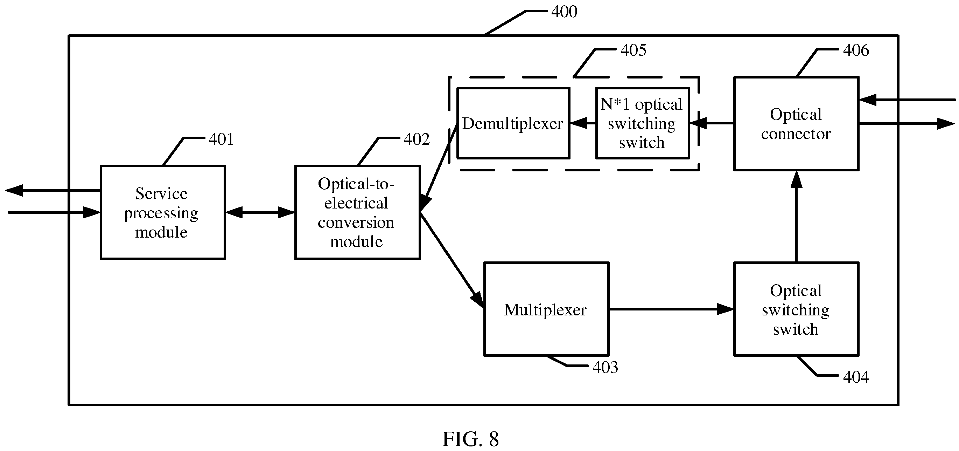

Based on the optical component 400 shown in FIG. 4, the optical receiving module 405 may be an arrayed waveguide grating router (arrayed waveguide grating router, AWGR), and a diagram of a possible implementation of the optical receiving module 405 may be shown in FIG. 7. In addition, the optical receiving module 405 may also include a demultiplexer and an N*1 optical switching switch, and a diagram of a possible implementation of the optical receiving module 405 may be shown in FIG. 8. In this embodiment, a value of N is related to the quantity of service nodes in the optical switching fully-interconnected system in which the optical component 400 is used, and the value of N is greater than or equal to the quantity of service nodes in the optical switching fully-interconnected system minus one. In addition, the optical switching switch may be an optical switching switch implemented based on a micro-electro-mechanical system (micro electro mechanical system, MEMS) technology or a liquid crystal on silicon-based wavelength selective switch (liquid crystal on silicon-based wavelength selective switch, LCOS-based WSS).

In this embodiment, to implement a response speed for optical switching, a response time of the optical switching switch may be designed to be within a nanosecond level. A specific implementation of the optical switching switch is not limited herein.

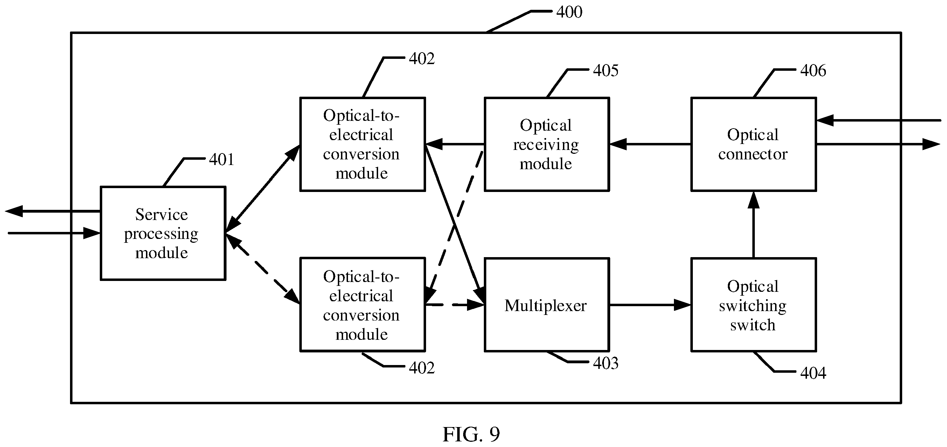

Based on the optical component 400 shown in FIG. 4, a quantity of optical-to-electrical conversion modules 402 may be set to at least one. However, in a preferred solution, there may be one optical-to-electrical conversion module 402. It may be understood that there may be two optical-to-electrical conversion modules 402, and a diagram of a possible implementation of the optical-to-electrical conversion modules 402 may be shown in FIG. 9.

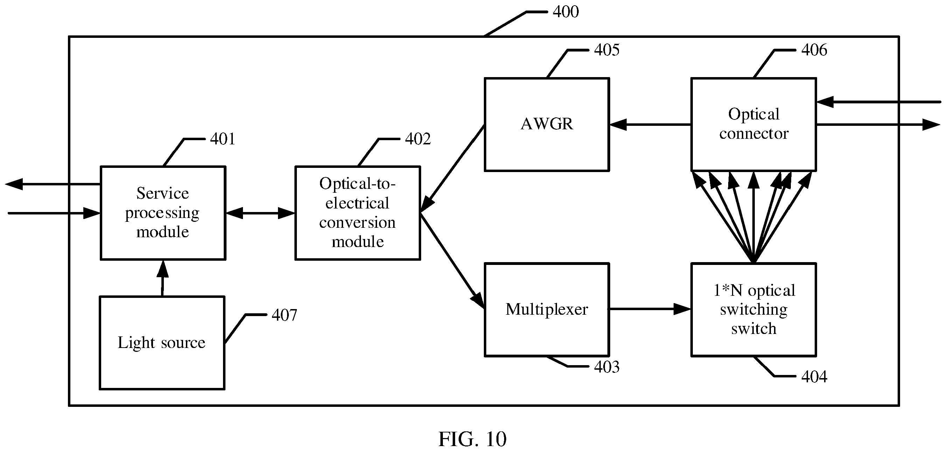

In this application, a preferred solution of the optical component 400 may be shown in FIG. 10. The optical component 400 includes the service processing module 401, one optical-to-electrical conversion module 402, the demultiplexer 403, the 1*N optical switching switch 404, the AWGR 405, the optical connector 406, and a light source 407.

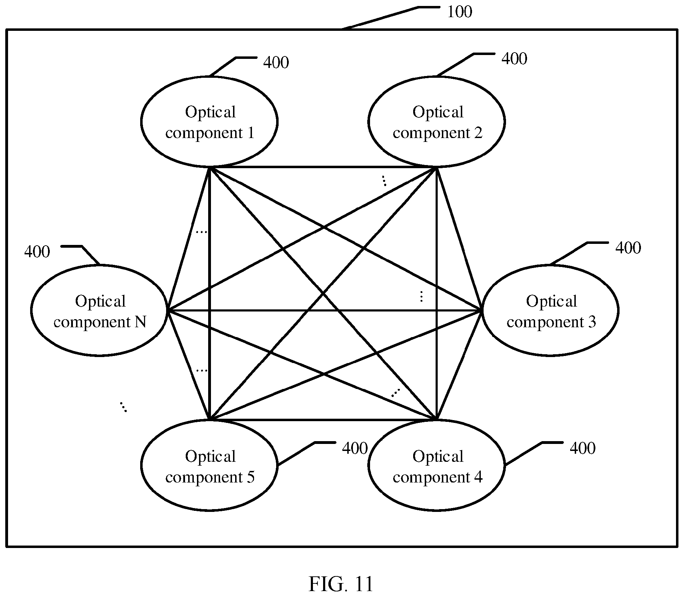

Based on the foregoing solution of the optical component 400, as shown in FIG. 11, an embodiment of this application provides an optical switching fully-interconnected system 100. The optical switching fully-interconnected system 100 includes N optical components 400, and the optical components 400 have the structure described in FIG. 4 to FIG. 10. The N optical components 400 serve as service nodes, and any two of the optical components 400 are directly connected to each other. In an example solution, as shown in FIG. 11, an optical component 1 communicates with an optical component 2, and a specific implementation process is as follows.

When the optical component 1 serves as a transmitting end, a service processing module in the optical component 1 is configured to process service data in communication to generate an electrical signal. An optical-to-electrical conversion module in the optical component 1 is configured to modulate service data carried in the electrical signal onto a light source to generate a corresponding optical signal. The optical-to-electrical conversion module in the optical component 1 then outputs the optical signal to a multiplexer in the optical component 1. The multiplexer in the optical component 1 may multiplex optical signals of different wavelengths to generate one optical signal, and transmit the optical signal to an optical switching switch in the optical component 1. The optical switching switch in the optical component 1 selects a corresponding port to output the optical signal to an optical connector in the optical component 1. The optical connector is connected to an optical connector of the optical component 2 via an optical fiber. Therefore, the optical connector in the optical component 1 transmits the optical signal to the optical connector of the optical component 2 via the optical fiber. The optical connector of the optical component 2 receives the optical signal sent by the optical component 1, and then the optical connector of the optical component 2 forwards the optical signal to an optical receiving module of the optical component 2. Then, the optical receiving module of the optical component 2 outputs the optical signal from a corresponding port, performs demultiplexing to generate a multi-wavelength optical signal, and then sends the multi-wavelength optical signal to an optical-to-electrical conversion module of the optical component 2. Then, the optical-to-electrical conversion module of the optical component 2 demodulates the multi-wavelength optical signal to generate a corresponding electrical signal and sends the electrical signal to a service processing module of the optical component 2.

In this embodiment, the optical components in the optical switching fully-interconnected system 100 may have a same structure or may have different structures. This is not specifically limited herein, provided that a function of the optical switching fully-interconnected system 100 can be implemented.

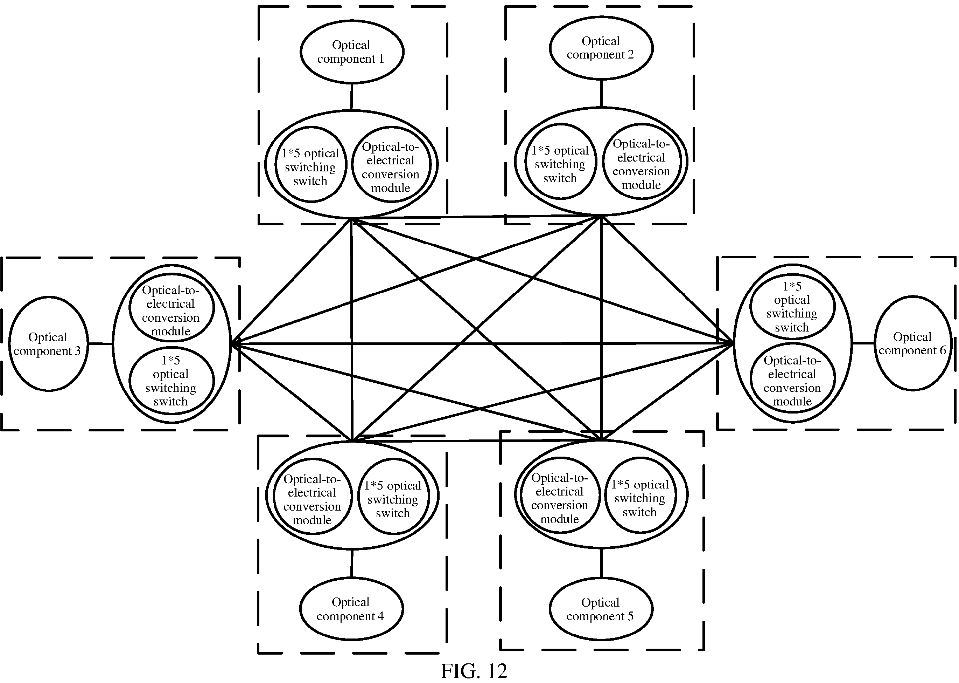

Optionally, in this embodiment of this application, an example solution of a preferred solution of the optical switching fully-interconnected system 100 may be shown in FIG. 12. A structure of the optical components is shown in FIG. 10.

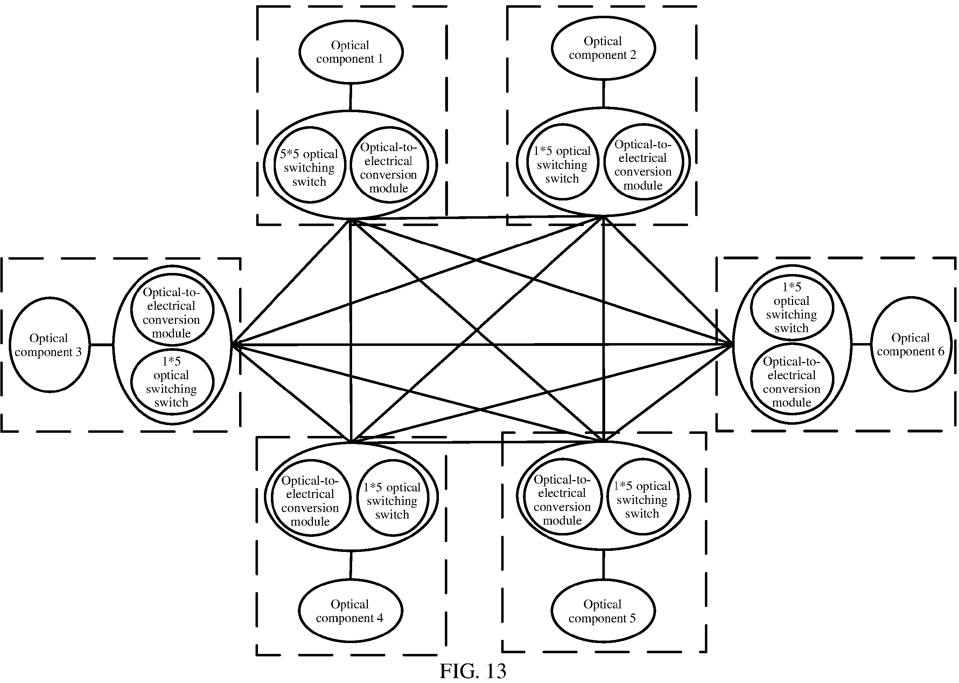

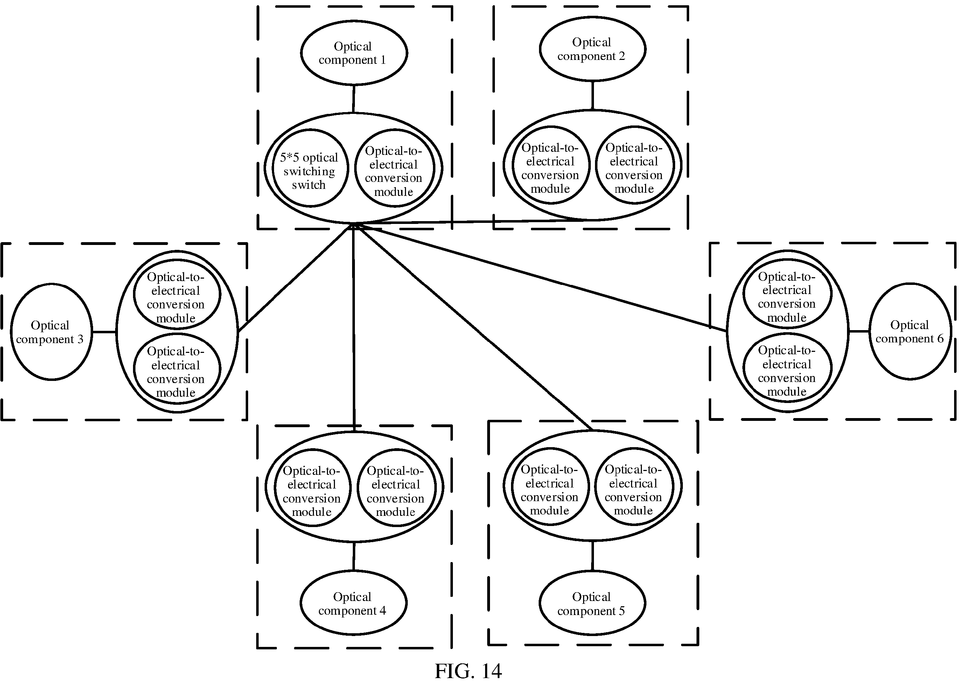

It may be understood that, if the optical switching switch in the optical component is an N*N optical switching switch, in this embodiment, the optical switching system may further have a possible implementation shown in FIG. 13. In this optical switching system, at least one optical component serving as a service node is shown in FIG. 6, and another optical component used as a service node may be the optical component shown in FIG. 4 to FIG. 5 and FIG. 7 to FIG. 10. The optical switching system may further have a possible implementation shown in FIG. 14. In this optical switching system, at least one optical component serving as a service node is shown in FIG. 6, and another optical component serving as a service node may have a structure of an existing optical component. This is not specifically limited herein. In this optical switching system, the optical component shown in FIG. 6, as a switching node in the entire optical switching system, can implement direct communication between the optical component shown in FIG. 6 and service nodes directly connected to the optical component shown in FIG. 6. The service nodes directly connected to the optical component shown in FIG. 6 indirectly communicate with each other by using the optical component shown in FIG. 6. That is, as shown in FIG. 14, if the optical component 2 communicates with an optical component 3, optical switching needs to be performed by using the optical component 1. However, direct communication may be implemented between the optical component 1 and the optical component 2 or between the optical component 1 and the optical component 3.

An embodiment of this application further provides a communication system, including the optical switching fully-interconnected system shown in FIG. 11.

The technical solutions in embodiments of this application may be applied to various communication systems, for example, a global system for mobile communication (Global System for Mobile Communication, GSM), a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a 5G communication system, and a future wireless communication system.

The optical component 400 in this application may be user equipment. This application describes embodiments with reference to the user equipment. The user equipment (User Equipment, UE) may also be a terminal device, an access terminal, a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a 5G network, or a terminal device in a future evolved PLMN.

Alternatively, the optical component 400 in this application may be a network device. This application describes embodiments with reference to the network device. The network device may be a device configured to communicate with user equipment. For example, the network device may be a base transceiver station (Base Transceiver Station, BTS) in a GSM system or a CDMA system, may be a NodeB (NodeB, NB) in a WCDMA system, or may be an evolved NodeB (Evolved NodeB, eNB or eNodeB) in an LTE system. Alternatively, the network device may be a relay station, an access point, a vehicle-mounted device, a wearable device, a network-side device in a 5G network, a network device in a future evolved public land mobile network (Public Land Mobile Network, PLMN), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be in an electronic form, a mechanical form, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. An optical component, used in an optical switching fully-interconnected system, comprising:
a service processing module, an optical-to-electrical conversion module, a multiplexer, an optical switching switch, an optical receiving module, and an optical connector, wherein
when the optical component serves as a transmitting end, a first electrical signal generated by the service processing module is converted by the optical-to-electrical conversion module to generate a first optical signal, and the first optical signal is multiplexed by using the multiplexer and is output to a next-hop optical component through the optical switching switch and the optical connector; and
when the optical component serves as a receiving end, the optical connector receives a second optical signal output by an optical connector of a previous-hop optical component, the second optical signal is demultiplexed by using the optical receiving module and is output to the optical-to-electrical conversion module, the second optical signal is converted by the optical-to-electrical conversion module to generate a second electrical signal, and the second electrical signal is output to the service processing module.

2. The optical component according to claim 1, wherein the optical switching switch is a 1*N optical switching switch, and N is a positive integer greater than or equal to 2.

3. The optical component according to claim 1, wherein the optical receiving module is an arrayed waveguide grating router AWGR, or the optical receiving module comprises a demultiplexer and an N*1 optical switching switch, and N is a positive integer greater than or equal to 2.

4. The optical component according to any one of claims 1 to 3, wherein the optical switching switch is an optical switching switch implemented based on a micro-electro-mechanical system MEMS technology or a liquid crystal on silicon-based wavelength selective switch LCOS-based WSS.

5. The optical component according to any one of claims 1 to 3, wherein a response speed of the optical switching switch is within a nanosecond level.

6. An optical switching fully-interconnected system, comprising:
N optical components, wherein any two of the N optical components are directly connected to each other, and N is a positive integer greater than or equal to 2;
the N optical components comprise a first optical component and a second optical component;
the first optical component comprises a first service processing module, a first optical-to-electrical conversion module, a first multiplexer, a first optical switching switch, a first optical receiving module, and a first optical connector;
the second optical component comprises a second service processing module, a second optical-to-electrical conversion module, a second multiplexer, a second optical switching switch, a second optical receiving module, and a second optical connector;
a quantity of output ports of the first optical switching switch and a quantity of output ports of the second optical switching switch are greater than or equal to a quantity of optical components in the optical switching fully-interconnected system minus one;
an electrical signal generated by the first service processing module is converted by the first optical-to-electrical conversion module to generate a first optical signal, wherein the first optical signal is multiplexed by using the first multiplexer and is sent to the second optical connector through the first optical switching switch and the first optical connector; and
an electrical signal generated by the second service processing module is converted by the second optical-to-electrical conversion module to generate a second optical signal, wherein the second optical signal is multiplexed by using the second multiplexer and is sent to the first optical connector through the second optical switching switch and the second optical connector.

7. The system according to claim 6, wherein the first optical switching switch is a 1*M optical switching switch, and M is a positive integer greater than or equal to N-1; and
the second optical switching switch is a 1*M optical switching switch, and M is a positive integer greater than or equal to N-1.

8. The system according to claim 6, wherein the optical switching fully-interconnected system further comprises a third optical component, and any two of the first optical component, the second optical component, and the third optical component are directly connected to each other;
the third optical component comprises a third service processing module, a third optical-to-electrical conversion module, a third multiplexer, a third optical switching switch, a third optical receiving module, and a third optical connector; and
an electrical signal generated by the third service processing module in the third optical component is converted by the third optical-to-electrical conversion module to generate a third optical signal, wherein the third optical signal is multiplexed by using the third multiplexer and is sent to the second optical connector and/or the first optical connector through the third optical switching switch and the third optical connector.

9. The system according to claim 8, wherein the first optical component, the second optical component, and the third optical component have a same structure.

10. The system according to any one of claims 6 to 9, wherein the first optical receiving module is an arrayed waveguide grating router AWGR, or the first optical receiving module comprises a demultiplexer and an M*1 optical switching switch;
the second optical receiving module is an arrayed waveguide grating router AWGR, or the second optical receiving module comprises a demultiplexer and an M*1 optical switching switch; and
M is a positive integer greater than or equal to N-1.

11. A communication system, comprising the optical switching fully-interconnected system described in at least one of claims 6 to 10, wherein the optical switching fully-interconnected system comprises the optical component according to any one of claims 1 to 5.
